# EUROPEAN PATENT APPLICATION

(11) **EP 0 546 979 A1**
(43) Date of publication of application: **16.06.1993**
(21) Application number: 92500112.5
(22) Date of filing: 09.09.1992
(51) Int. Cl.: B23K 31/02, E04F 11/18

(54) **Process for the manufacturing of elements for decorative metal structures**

(30) Priority: 11.12.1991 ES 9102761
(71) Applicant: CERCOBI, S.A., E-08759 Vallirana (Barcelona) (ES)
(72) Inventor: Anton Busquets Verges, 08757 Corbera de LLobregat Barcelona (ES)
(74) Representative: Ponti Sales, Adelaida

(57) **Abstract**

A bar (3) is formed on the basis of an iron core (1) covered by a sleeve (2) of a decorative metal, which can leave the ends (1a) of the core exposed or, by means of a process of drawing and flattening of the ends (2a) of the sleeve, cover it totally, forming a second component (4). The bars (3) are joined together at their ends (1a) by a known welding process. The ends of the bars (3) may also be joined to iron handrails (5) by the same procedure. Components (3) and (4) may be joined between them (3 to 3 and 4 to 4) or to each other (3 to 4) by a welding process, which includes a first phase of fusion of the sleeve (2) section of the pieces to be joined, followed by a second phase of direct welding of the cores (1). The welds made are covered by clamps (8) or hoods (9).

This procedure allows the formation of structures with decorative metal components of different nature, on the basis of pieces with iron core and decorative metal sleeve of different types and with conventional fusion processes.

## Description

The present invention refers to a procedure for the manufacturing of elements for decorative metal structures, using metal elements of different properties.

### BACKGROUND OF THE INVENTION

The formation of decorative metal structures, using decorative metal components of similar or different properties, is very difficult and costly, because the welding between them requires special procedures which render the product more expensive. Furthermore, known structures formed by special metals of decorative type, such as stainless steel, aluminium, copper, brass and others, are formed using very costly solid components. The difficulties described increase, if anything, when metal components of different properties have to be joined together.

### DESCRIPTION OF THE INVENTION

The procedure object of the invention was conceived in order to solve the disadvantages described and facilitate the formation of decorative metal structures using metal components difficult to weld.

The procedure for the manufacturing of elements for decorative metal structures formed by metal components in the form of artistic forging is cbaracterized in that it consists in covering iron metal pieces with a sleeve of a decorative material, except for the ends of the core which project beyond the ends of the sleeve, forming bar-sbaped components. These components are joined together by their ends or are joined to a handrail or other conventional iron piece by a known method of iron welding. The welded zones are covered using clamps and hoods of any material, which hide the welds and at the same time constitute decorative elements of the structure.

In other cases the ends of the tubular sleeve are subjected to a process of drawing and flattening until they cover the ends of the core of the bars, forming components in which the core is left bidden by the sleeve. These components are attached to the bars, or to each other, by means of a welding process which includes a first phase of fusion with expulsion of sleeve material in the zones on which union of the components is to be carried out, followed by welding of the inner cores.

### BRIEF DESCRIPTION OF THE DRAWINGS

For a better understanding of all that has been set forth in the present specification, there are attached some drawings in which, only by way of example, a practical case of embodiment of the procedure in question is shown.

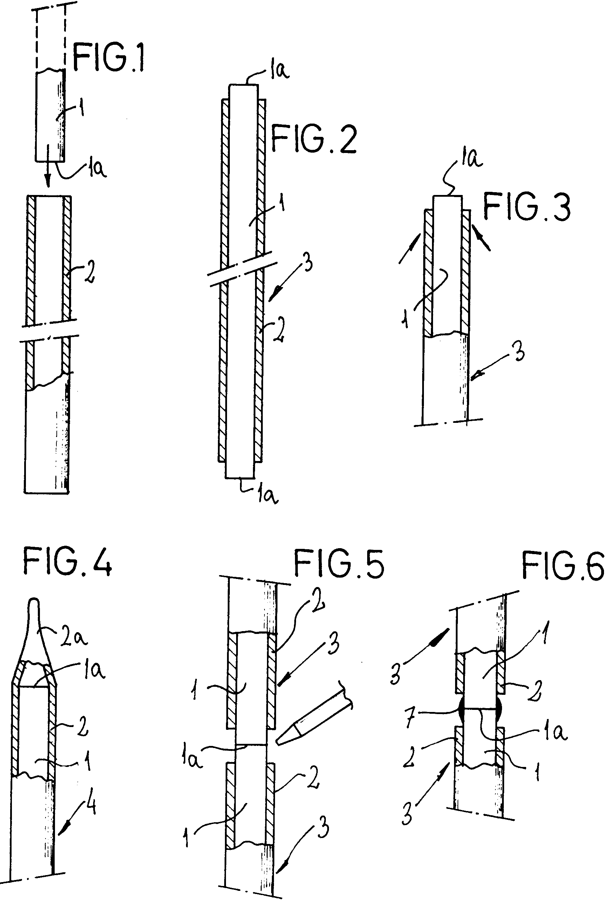

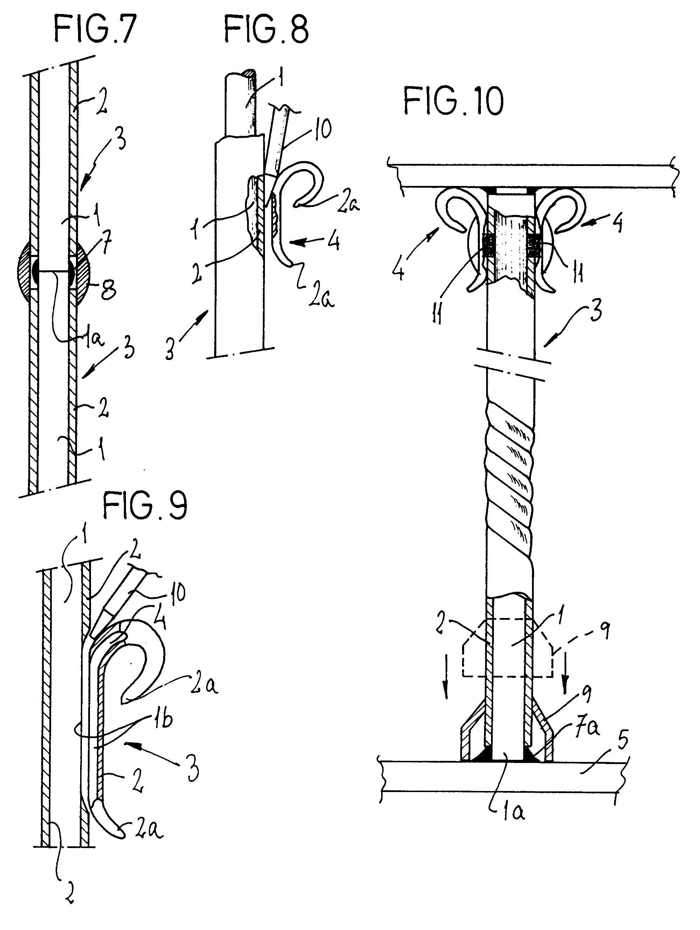

In said drawings, figure 1 is a partially sectioned elevation view, showing schematically the covering of an iron core using a tubular sleeve of a different metal; figure 2 is a view similar to that of figure 1, showing the component or rod obtained, in which the ends of the core project beyond the ends of the sleeve; figure 3 is a view similar to the previous two, showing one end of the component shown in figure 2, which is subjected to a process of drawing and flattening of the sleeve until it totally covers the end of the iron core; figure 4 is a similar view showing the end of the component obtained once the process of drawing and flattening of the end of a process of union by normal welding; figure 6 is a view similar to that of figure 5, once the ends have been joined; figure 7 is a view similar to that of figure 6, with the zone of the weld covered by a decorative clamp; figures 8 and 9 are views similar to that of figure 5, but showing the process of joining by fusion of the outer sleeve and welding of the cores of two components; and figure 10 is a partially sectioned elevation view showing a structure obtained with the procedure of the invention.

### DESCRIPTION OF A PREFERRED EMBODIMENT

The procedure for the manufacturing of elements to provide decorative metal structures, object of the invention, consists, firstly, in covering iron bars or iron core -1- using a tubular sleeve -2- of a decorative metal other than iron, such as stainless steel, aluminium, brass, copper or other metal (figure 1). In principle, the ends -1a- of the core -1- project through the ends of the sleeve -2-.

The piece thus obtained is identified in the drawings with the general reference -3- (figure 2).

In other cases, the procedure in question furthermore includes an operation of drawing and flattening of the ends -2a- of the tubular sleeve -2- of a conventional number of pieces -3-, until the ends -1a- of the core -1- are completely covered, giving rise to the formation of complementary pieces of general reference -4- (figures 3 and 4).

On the basis of components -3- and -4-, which can be given a conventional shape by means of known procedures which do not affect the invention, the procedure consists in joining several components -3-, either to each other (figures 5, 6 and 7) or to a handrail -5- (figure 10) or another piece of iron, using normal iron welding methods (electrodes, "MIG" system or other known methods), shown schematically by means of a nozzle -6-.

In these cases a weld -7- is obtained which joins the projecting ends -1a- of the iron cores -1- (figure 6) and is covered and bidden by means of a clamp -8- (figure 7) which constitutes an additional decorative component. Where the components -3- are to be joined to a handrail -5- or other iron piece, a weld -7a- is obtained which is covered by means of a hood -9- (figure 10).

The weld is executed by means of conventional procedures for welding together pieces of iron, since the ends -1a- to be welded and the handrail or other similar piece are made of iron.

In order to join the components -4- of decorative type and the components -3-, either between themselves (-3- to -3- and -4- to -4-) or to each other (-3- to -4-) on sections covered by the metal sleeve -2-, the procedure envisages that a welding process be executed using a known apparatus, shown schematically by means of a nozzle -10-, which includes a first phase of fusion with expulsion of material from the sleeve -2- in the zones where the union of pieces -3- and -4- (figures 8 and 9) is to be carried out, in such a way that the sections -1b- of the core -1- are left exposed.

Following fusion of the material -2-, welding of the cores -1- of both pieces (figure 10) is carried out, said weld being represented by the reference -11-.

The procedure described has the advantage that the union of components -3- between themselves or to a piece of iron -5-, and of components -3- and -4- to each other can be achieved using conventional iron welding systems.

Despite the use of conventional iron welding systems, the fact that components -3- and -4- present an outer covering of a decorative metal lends the structure formed with this procedure an extraordinary visual power.

It is important to stress that the procedure in question, in which the welds are always made between pieces of iron, covered or otherwise, allows incorporation into the structure of pieces with coverings of different metals, which is difficult, or at least very costly, to achieve with the known union procedures.

In addition to the described advantages of an aesthetic and decorative order involved in the use of special metals (stainless steel, aluminium, brass, copper and others) in the procedure of the invention, alone or combined with each other, major advantages of an economic order are achieved, since the components -3- and -4- used in the procedure in question are not made entirely of decorative materials, such as those listed above, but include an iron core -1- and only a tubular sleeve -2- of the decorative metal. This characteristic of the procedure obviously means a reduction in the costs of the resulting structure compared with the costs of a structure made from solid components of decorative metals.

Independent of the object of the invention shall be the materials used in manufacturing of the components of the procedure object of the invention, their shapes and dimensions and all accessory details which might arise, as long as they do not affect its essential nature.

## Claims

1. A procedure for the manufacturing of elements for decorative metal structures formed by metal components in the form of artistic forging, characterized in that it consists in covering iron pieces (1) with a sleeve (2) of a decorative metal, according to a conventional system, except for the ends (1a) of the core, which project beyond the ends of the sleeve forming bar-shaped components (3), which are joined together by their ends (1a) or are joined to a handrail or other conventional iron piece (5) by a known method of iron welding, the welded zones being covered using clamps (8) and hoods (9) of any material, which hide the welds (7, 7a) and at the same time constitute decorative elements of the structure.

2. A procedure as claimed in claim 1, characterized in that the ends (2a) of the tubular sleeve (2) are subjected to a process of drawing and flattening until they cover the ends (1a) of the core (1) of the bars (3), forming components (4) in which the core remains hidden by the sleeve, then proceeding to join these components (4) and the bars (3), between themselves (3 to 3, 4 to 4) or to each other (3 to 4) by means of a welding process which includes a first phase of fusion with expulsion of material from the sleeve (2) in the zones on which union of the components (3, 4) is to be carried out.
